# EUROPEAN PATENT APPLICATION

(11) **EP 2 804 446 A1**
(43) Date of publication of application: **19.11.2014**
(21) Application number: 13199042.6
(22) Date of filing: 20.12.2013
(51) Int. Cl.: H05B 37/02

(54) **Lighting control system, arrangement registering method, and recording medium storing arrangement registering program**

(30) Priority: 14.05.2013 JP 2013102558
(71) Applicant: Toshiba Lighting & Technology Corporation, Yokosuka-shi, Kanagawa 237-8510 (JP)
(72) Inventor: Nishigaki, Hidenori, Kanagawa, 237-8510 (JP); Yamamoto, Hisashi, Kanagawa, 237-8510 (JP)
(74) Representative: Willquist, Sofia Ellinor

(57) **Abstract**

According to one embodiment, there is provided a lighting control system including an integral control unit capable of a control; a mobile terminal which photographs a plurality of lighting apparatuses among a plurality of lighting apparatuses as a photographing range; and a control unit which performs a first process of obtaining an association between an image portion of the lighting apparatus in a photographed image and an arranging position on a layout drawing; a second process which obtains a correspondence between the lighting apparatuses which are sequentially turned on and the lighting apparatuses on the layout drawing; and a third process in which each address corresponding to the lighting apparatuses which are arranged on the layout drawing is caused to correspond with each ID information of the plurality of lighting apparatuses.

## Description

### FIELD

Embodiments described herein relate generally to a lighting control system, an arrangement registering method, and a recording medium storing an arrangement registering program.

### BACKGROUND

In the related art, a lighting control system which performs a remote control of a lighting load of a lighting apparatus, or the like, which is provided in each lighting area such as each floor, or each area is adopted in an office building, various facilities, or the like. In such a lighting control system, it is possible to perform a lighting control in which lighting only in an area where a person is present is turned on, lighting in an area where a person is not present is turned off, or the like, by detecting a movement when a person, an object, or the like, moves in a sensing area, for example, and accordingly, it is effective in reducing power consumption.

In a lighting control system which controls such a plurality of lighting apparatuses, it is possible to perform a control in which only a lighting apparatus with a specific ID is turned on using an ID which is provided in each lighting apparatus. In this case, in order to make a lighting control of a lighting apparatus in a desired position possible, it is necessary to grasp an association between each lighting apparatus and an arranging position of each lighting apparatus.

For example, a method in which an association between a lighting apparatus and an arranging position thereof is registered by sequentially turning on each lighting apparatus in a control console of a lighting control system, and confirming an actual lighting state of the lighting apparatus is taken into consideration. However, it is extremely complicated to confirm a lighting state of a lighting apparatus, and to register an association. Therefore, a system is also developed in which an imaging apparatus is provided on a ceiling plane, and registering is made simple, in order to confirm an actual lighting state of a lighting apparatus.

However, there is a problem that this type of system becomes large, since it is necessary to provide a fixed imaging apparatus.

### BRIEF DESCRIPTION OF THE DRAWINGS

FIG. 1 is an explanatory diagram which illustrates a lighting control system according to a first embodiment.
FIG. 2 is an explanatory diagram which illustrates an example of a layout drawing illustrating an arrangement of each lighting apparatus.
FIG. 3 is a block diagram which illustrates a specific configuration of an integral control unit.
FIG. 4 is a block diagram which illustrates a specific configuration of a mobile terminal.
FIG. 5 is a block diagram which illustrates a specific configuration of a lighting apparatus.
FIG. 6 is an explanatory diagram which describes photographing using the mobile terminal.
FIG. 7 is an explanatory diagram which describes the photographing using the mobile terminal.
FIG. 8 is a flowchart which describes arrangement registering according to the first embodiment.
FIG. 9 is a flowchart which illustrates a second embodiment.

### DETAILED DESCRIPTION

A lighting control system according to one embodiment includes an integral control unit which controls a plurality of lighting apparatuses in which ID information unique to each is assigned in predetermined order; a mobile terminal configured to photograph a part of or all of the plurality of lighting apparatuses; and a control unit which performs a first process in which an association between an image portion of the lighting apparatus in a photographed image and an arranging position on a layout drawing is obtained using information on the layout drawing which illustrates the arranging positions of the plurality of lighting apparatuses, and using an image analysis process of the photographed image which is obtained by the mobile terminal; a second process in which a correspondence between the lighting apparatuses which are sequentially turned on and the lighting apparatuses on the layout drawing is obtained; and a third process in which each address corresponding to the lighting apparatuses which are arranged on the layout drawing is caused to correspond with each ID information of the plurality of lighting apparatuses.

In the system, the control unit may perform the first process using information on a photographing position, and information on a photographing direction using the mobile terminal.

In the system, the mobile terminal may include a display unit which displays a layout drawing based on information on the layout drawing.

In the system, the mobile terminal may obtain information on the photographing position based on a user operation with respect to the layout drawing which is displayed on the display unit.

In the system, the control unit may be provided in any one of the integral control unit and the mobile terminal.

In the system, the control unit may include the first processing unit which performs at least one of the first to third processes, and the second processing unit which performs processes other than the processes which are performed by the first processing unit, in which the first processing unit is provided in the integral control unit, and the second processing unit is provided in the mobile terminal.

An arrangement registering method according to another embodiment, in a lighting control system which includes an integral control unit which controls a plurality of lighting apparatuses in which ID information unique to each is assigned in predetermined order, and a mobile terminal configured to photograph a part of or all of the plurality of lighting apparatuses, the method includes performing a first process in which an association between an image portion of the lighting apparatus in a photographed image and an arranging position on a layout drawing is obtained using information on the layout drawing which illustrates the arranging positions of the plurality of lighting apparatuses, and using an image analysis process of the photographed image which is obtained by the mobile terminal; performing a second process in which a correspondence between the lighting apparatuses which are sequentially turned on and the lighting apparatuses on the layout drawing is obtained; and performing a third process in which each address corresponding to the lighting apparatuses which are arranged on the layout drawing is caused to correspond with each ID information of the plurality of lighting apparatuses.

In the arrangement registering method, the first process may be performed using information on a photographing position and information on a photographing direction using the mobile terminal.

A computer-readable recording medium according to still another embodiment storing an arrangement registering program in a lighting control system which includes an integral control unit which controls a plurality of lighting apparatuses in which ID information unique to each is assigned in predetermined order, and a mobile terminal configured to photograph a part of or all of the plurality of lighting apparatuses, the medium causes a computer to perform a first process in which an association between an image portion of the lighting apparatus in a photographed image and an arranging position on a layout drawing is obtained using information on the layout drawing which illustrates the arranging positions of the plurality of lighting apparatuses, and using an image analysis process of the photographed image which is obtained by the mobile terminal; a second process in which a correspondence between the lighting apparatuses which are sequentially turned on and the lighting apparatuses on the layout drawing is obtained; and a third process in which each address corresponding to the lighting apparatuses which are arranged on the layout drawing is caused to correspond with each ID information of the plurality of lighting apparatuses.

In the medium in which the arrangement registering program is stored, the first process may be performed using information on a photographing position, and information on a photographing direction using the mobile terminal.

Hereinafter, embodiments will be described in detail with reference to drawings.

### First Embodiment

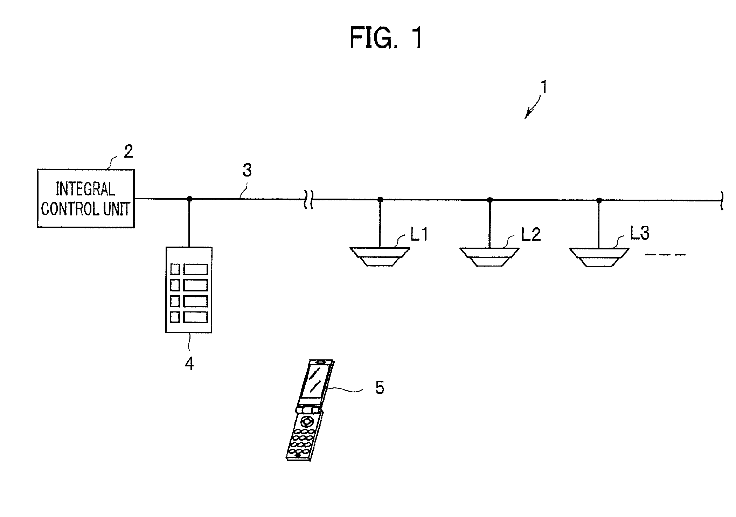

FIG. 1 is an explanatory diagram which illustrates a lighting control system according to a first embodiment. A lighting control system 1 in FIG. 1 is configured of a plurality of lighting apparatuses L1, L2, ... (hereinafter, representatively referred to as lighting apparatus L), an integral control unit 2 which integrally controls these lighting apparatuses L, and a mobile terminal 5 as a photographing device which photographs the lighting apparatuses L.

The lighting apparatus L is provided in each lighting area such as each floor or each area of an office building, various facilities, or the like. The lighting apparatus L is connected to the integral control unit 2 which performs a remote control of the lighting apparatus L through a transmission line 3. To the transmission line 3, a wall switch 4, a human detection sensor (not shown), and the like, are also connected, and the integral control unit 2 can integrally control the lighting apparatus L, the wall switch 4, the human sensor, and the like.

According to the embodiment, each of the lighting apparatuses L has a unique ID, and the integral control unit 2 obtains and stores the IDs of each of the lighting apparatuses L. For example, the integral control unit 2 can obtain the IDs from each of the lighting apparatuses L through communication with each of the lighting apparatuses L. In this manner, the integral control unit 2 can perform an on-off control and a dimming control of a desired lighting apparatus L by designating an ID of each lighting apparatus L.

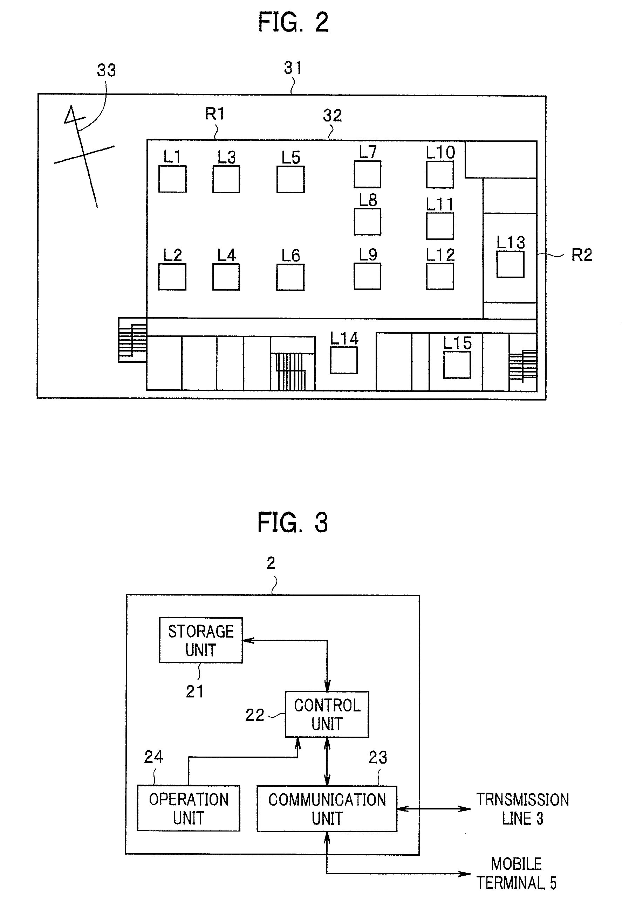

FIG. 2 is an explanatory diagram which illustrates an example of a layout drawing illustrating arrangements of each of the lighting apparatuses L.

A layout drawing 31 illustrates a room layout of each room including rooms R1, R2, ... (hereinafter, representatively referred to as room R) in a building 32, and arranging of lighting apparatuses L1 to L15. A square frame in the layout drawing 31 denotes an arranging position of the lighting apparatus L, and an address which specifies a lighting apparatus provided in each arranging position is given to each arranging position, though it is not shown. For example, addresses 1-1 to 1-6 are given to lighting apparatuses L1 to L6, addresses 2-1 to 2-6 are given to lighting apparatuses L7 to L12, an address 3-1 is given to a lighting apparatus L13, an address 4-1 is given to a lighting apparatus L14, and an address 5-1 is given to a lighting apparatus L15. Here, addresses are different from unique IDs which are set in advance in the lighting apparatuses, and are used by being given to each lighting apparatus which is arranged in each arranging position on a layout drawing by a manager for convenient management. A display 33 which denotes orientation is also displayed in the layout drawing 31. In addition, though it is not illustrated in the layout drawing 31, the lighting apparatuses L1 to L15 are assumed to be arranged on a ceiling, and information on a distance from a floor to the ceiling is also assumed to be included in information on the layout drawing 31. That is, the information on the layout drawing is assumed to include pieces of information on an arranging position and an address thereof, and orientation of the lighting apparatus L in each room, and a distance from a floor to a ceiling in each room. In addition, it is clear that image information of the layout drawing, and information on a position, an address, orientation, and a distance (hereinafter, referred to as layout drawing related information) may be set as separate information, and these pieces of information may be obtained respectively.

The integral control unit 2 can obtain an ID of each lighting apparatus L by communicating with the lighting apparatus L, but cannot recognize which position each lighting apparatus L is arranged at only by communicating with each of the lighting apparatuses L. As described above, a manual input, or introduction of a large-scale system was necessary in the related art when performing arrangement registration (ID registration) of each of the lighting apparatuses L on the layout drawing.

In contrast to this, according to the embodiment, it is possible to recognize a position of the lighting apparatus L in the integral control unit 2 using an image analysis with respect to a photographing result of the mobile terminal 5, and by obtaining an association between a position of each lighting apparatus on the layout drawing and an actual position of the lighting apparatus.

In addition, according to the embodiment, an association with a lighting apparatus on the layout drawing is obtained by performing an analysis of a photographed image in order to make the arrangement registering of the lighting apparatus simple, but other processes excluding obtaining of the photographed image in the mobile terminal 5 may be executed in any of constituent elements on the lighting control system 1. For example, the image analysis may be executed in any of the integral control unit 2 and the mobile terminal 5, and the layout drawing 31 may be maintained in any of the integral control unit 2 and the mobile terminal 5. In addition, according to the embodiment, it is described that the integral control unit 2 maintains image information of the layout drawing 31, and layout drawing related information. In addition, the information on the layout drawing is assumed to include the layout drawing related information in order to make the following descriptions simple.

FIG. 3 is a block diagram which illustrates a specific configuration of the integral control unit 2. The integral control unit 2 includes a storage unit 21 which stores information on the lighting apparatus L, a control unit 22 which is configured of a CPU, or the like, a communication unit 23, and an operation unit 24 which receives a user operation. According to the embodiment, the storage unit 21 also stores information on the layout drawing. The control unit 22 generates a control signal which controls the lighting apparatus L based on the information which is stored in the storage unit 21 according to an operation of the operation unit 24. The communication unit 23 makes an on-off control and a dimming control possible by providing the control signal to each of the lighting apparatuses L through the transmission line 3.

In addition, the communication unit 23 can perform communication with the mobile terminal 5. As it will be described later, the control unit 22 performs arrangement registering in which an ID of a corresponding lighting apparatus is allocated at an arranging position of each lighting apparatus on the layout drawing which is stored in the storage unit 21, based on information from the mobile terminal 5.

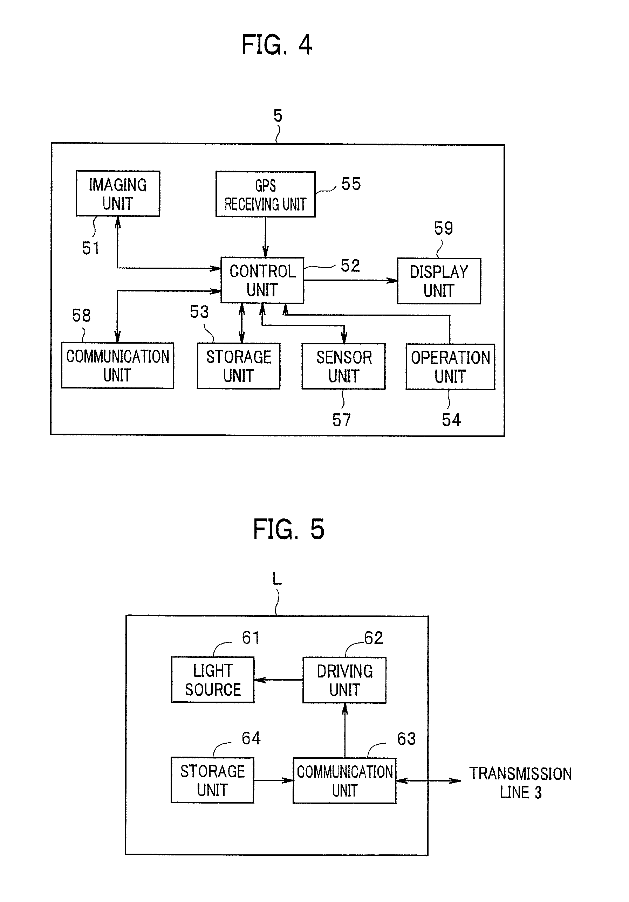

FIG. 4 is a block diagram which illustrates a specific configuration of the mobile terminal 5. The mobile terminal 5 includes an imaging unit 51. The imaging unit 51 performs photographing under the control of a control unit 52, and outputs a photographed image to the control unit 52. The control unit 52 is configured of a CPU, or the like, causes a display unit 59 to display the photographed image by supplying the image to the display unit after performing a predetermined image signal processing with respect to the photographed image, and causes a storage unit 53 to store the image by supplying the image to the storage unit. The mobile terminal 5 is provided with an operation unit 54, and the operation unit 54 outputs an operation signal corresponding to a user operation to the control unit 52. In this manner, the control unit 52 controls each unit according to the user operation.

The display unit 59 is configured of an LCD, or the like, and can perform a menu display, or displays of various application programs under the control of the control unit 52. In addition, it is possible to arrange a touch panel which is not shown in the display unit 59, and in this case, it is possible to output an operation signal corresponding to a touch operation by a user with respect to an image which is displayed on the display unit 59 from the touch panel to the control unit 52. For example, when a layout drawing is displayed on the display unit 59, in a case in which a user performs a touch operation with respect to a predetermined position on the layout drawing, it is possible to obtain information on the position in the control unit 52.

In addition, the mobile terminal 5 includes a global positioning system (GPS) receiving unit 55, and a sensor unit 57. The GPS receiving unit 55 performs positioning based on information from a GPS satellite. The sensor unit 57 includes a geomagnetism sensor, a gyro sensor, an acceleration sensor, or the like, and obtains an output of each sensor. The control unit 52 can detect a photographing direction of the imaging unit 51, that is, orientation and an angle of elevation based on outputs from the GPS receiving unit 55 and the sensor unit 57.

In addition, the mobile terminal 5 includes a communication unit 58. The control unit 52 can transmit various pieces of information to the integral control unit 2 through the communication unit 58.

Each function of such a mobile terminal 5 can be executed by, for example, a smart phone and it is possible to make a system with a simple configuration by adopting a smart phone, or the like, as the mobile terminal 5.

According to the embodiment, an application for obtaining information (including information corresponding to apparatus image which will be described later) which is necessary for performing arrangement registering is stored in the storage unit 53, and the control unit 52 obtains information which is necessary for performing the arrangement registering by starting the application. The control unit 52 transmits the information which is obtained through the communication unit 58 to the integral control unit 2.

FIG. 5 is a block diagram which illustrates a specific configuration of the lighting apparatus L. The lighting apparatus L includes a light source 61, a driving unit 62, a communication unit 63, and a storage unit 64. The communication unit 63 is connected to the transmission line 3, receives a control signal from the integral control unit 2, and supplies the signal to the driving unit 62. The driving unit 62 drives the light source 61 based on the control signal. In this manner, the light source 61 performs an on-off control and a dimming control using the control signal from the integral control unit 2.

In the storage unit 64, ID information which is unique to each lighting apparatus L is stored. The communication unit 63 reads out the ID information from the storage unit 64 according to a command from the integral control unit 2, and transmits the information to the integral control unit 2 through the transmission line 3.

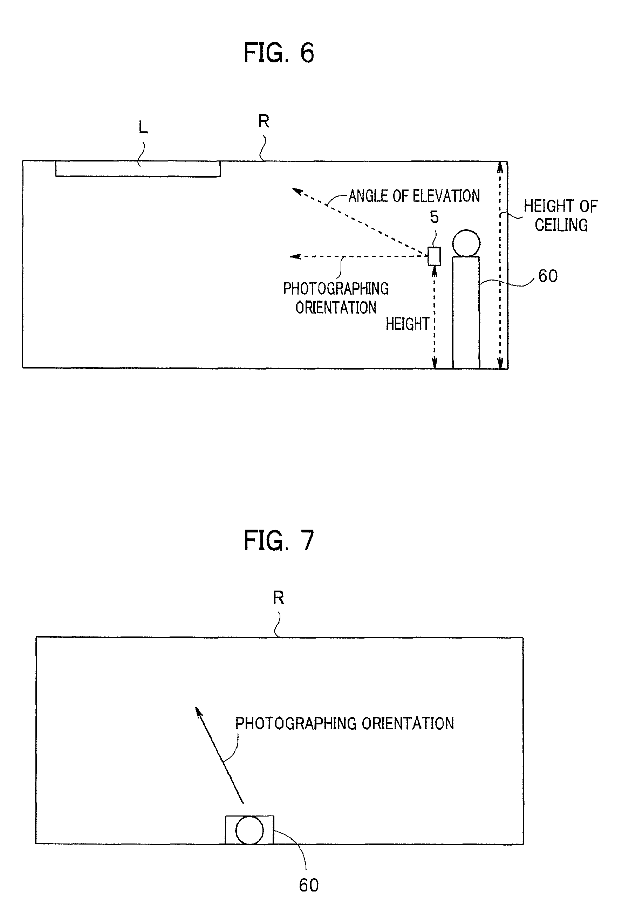

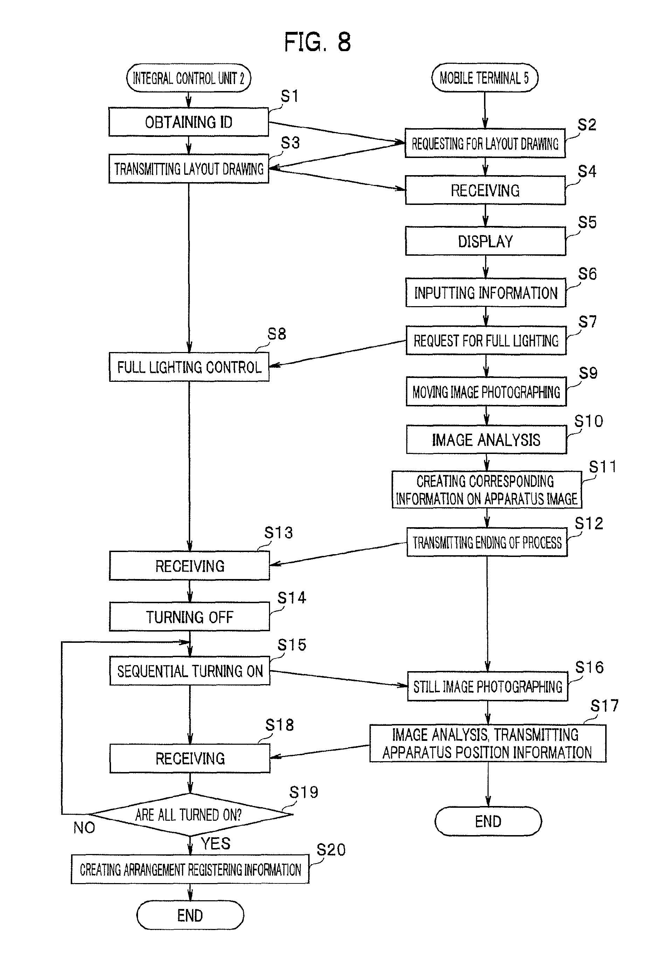

Subsequently, operations of the embodiments which are configured in this manner will be described with reference to FIGS. 6 to 8. FIGS. 6 and 7 are explanatory diagrams which describe photographing using the mobile terminal 5, and FIG. 8 is a flowchart which describes arrangement registering.

According to the embodiment, an operator photographs a lighting apparatus L using the mobile terminal 5 so that a plurality of lighting apparatuses are included in a photographing range. It is possible to perform efficient arrangement registering when photographing all of the lighting apparatuses L at a time which will be subject to arrangement registering, but only a part of the lighting apparatuses L may be photographed, and then all of the lighting apparatuses L which are subject to the arrangement registering may be photographed by gradually shifting a photographing range, when the range which will be photographed is large, or the like.

According to the embodiment, first, information on an association between an arranging position of a lighting apparatus on a layout drawing and a position (pixel position) of a photographed lighting apparatus in a photographed image (hereinafter, referred to as corresponding information on apparatus image) is created as the first process. Information on a photographing range of the mobile terminal 5 is not essential in order to obtain the corresponding information on the apparatus image, but it is necessary to obtain information on at least a photographing direction, and a photographing position of the mobile terminal 5, and a distance from the photographing position to a ceiling.

FIG. 6 illustrates a state in which a lighting apparatus L which is provided on a ceiling of a room R is photographed by an operator 60 who is holding the mobile terminal 5 at the ready. In addition, FIG. 7 illustrates a state in which the photographing direction in FIG. 6 is viewed from the top, and the operator 60 performs photographing toward photographing orientation which is denoted by an arrow in the room R.

As illustrated in FIGS. 6 and 7, the operator 60 makes the mobile terminal 5 face the oblique upper side on the lighting apparatus L side. FIG. 7 illustrates photographing orientation in this case, and FIG. 6 illustrates an angle of elevation in this case. Pieces of information on the photographing orientation and the angle of elevation can be obtained using the GPS receiving unit 55 and the sensor unit 57 of the mobile terminal 5.

Positions in the horizontal direction and vertical direction of the mobile terminal 5 can be obtained using an input operation of the operator 60. For example, it is possible to input a position of the mobile terminal on the layout drawing (photographing position in horizontal direction), and to input the height of the mobile terminal 5 when holding the terminal by operating the operation unit 54 or the touch panel of the mobile terminal 5. It is possible to obtain information on the distance from the photographing position to a ceiling using the height of the mobile terminal 5 when the operator 60 holds the mobile terminal, and the known height of the ceiling which is included in the layout drawing related information. In addition, it is also possible to obtain an approximate value using the height of the operator with respect to the height of holding the mobile terminal 5, and to make an information input operation simple by inputting the height of the operator, instead of the holding height of the terminal.

In addition, a case in which information on the photographing position in the horizontal direction, and in the vertical direction is input using an input operation of the operator 60 is described, but photographing may be performed by causing the operator 60 to perform the photographing always in a photographing position by determining the photographing position in advance. In this case, the input operation of the information on the photographing position is not necessary.

In addition, it is possible to detect an object of each lighting apparatus L in a photographed image by performing an image analysis of the photographed image. Accordingly, it is possible to understand at which arranging position on the layout drawing the lighting apparatus L which is most largely photographed among the photographed images is located, when understanding a photographing position, and a photographing direction on the layout drawing, and a distance from the photographing position in the vertical direction to a ceiling. In addition, it is possible to obtain an association between each image of each lighting apparatus L which is obtained through the image analysis and each lighting apparatus on the layout drawing, using an image of the closest lighting apparatus as a base, and to understand to which lighting apparatus on an arranging position on the layout drawing the image portions of all of the lighting apparatuses in the photographed image correspond.

FIG. 8 describes an arrangement registering process by assuming that an application for obtaining such information on the association (corresponding information on apparatus image) is stored in the storage unit 53 of the mobile terminal 5. The process of the mobile terminal 5 in FIG. 8 can be executed when the control unit 52 executes the application which is read out from the storage unit 53. In addition, the application may be downloaded from the integral control unit 2 by the mobile terminal 5.

In Act 1 in FIG. 8, the integral control unit 2 obtains an ID of a lighting apparatus L. On the other hand, the mobile terminal 5 makes a transmission request of the layout drawing with respect to the integral control unit 2 (Act 2). The integral control unit 2 transmits information on the layout drawing to the mobile terminal 5 when receiving the transmission request of the layout drawing (Act 3). The mobile terminal 5 receives the information on the layout drawing in Act 4, and displays the layout drawing on the display unit 59 (Act 5).

For example, the layout drawing 31 in FIG. 2 is displayed on a display screen of the display unit 59. The operator 60 inputs information on a photographing position in Act 6. For example, the operator 60 touches his own position on the layout drawing 31, and inputs the height of holding the mobile terminal 5.

When finishing the input of information, the mobile terminal 5 transmits a request for full lighting to the integral control unit 2 (Act 7). In this manner, the integral control unit 2 turns on all of the lighting apparatuses L (Act 8). The mobile terminal 5 performs moving image photographing by operating the imaging unit 51 after the request for lighting (Act 9). The control unit 52 of the mobile terminal 5 performs an image analysis of a photographed image, and detects an image portion of each lighting apparatus L from the photographed image (Act 10). The detection of each of the lighting apparatuses L may be performed by specifying a portion in which a luminance difference is relatively high compared to the periphery, or an image whose luminance is equal to or greater than a predetermined luminance. In addition, the control unit 52 obtains corresponding information on an apparatus image which denotes an association between an arranging position of each lighting apparatus L on the layout drawing and an image portion in a photographed image of each lighting apparatus L which is actually photographed using information on a photographing position, information on a photographing direction, and information on a distance from the photographing position to a ceiling (Act 11).

In addition, the request for full lighting is performed so as to make the image analysis of the lighting apparatus L simple by turning on the lighting apparatus L, and the lighting apparatus L is not necessarily turned on when it is possible to detect the image portion of the lighting apparatus L.

The mobile terminal 5 performs a transmission of a process completion which denotes that a creating process of the corresponding information on apparatus image is completed (Act 12). When receiving the transmission (Act 13), the integral control unit 2 turns all of the lighting apparatuses L off (Act 14), and then sequentially turns each lighting apparatus L on in predetermined order (Act 15). In addition, the integral control unit 2 may turn the lighting apparatus L on one by one, and may increase the number of lighting apparatuses L which will be turned on one by one. In addition, the integral control unit 2 may turn off the lighting apparatuses L which are all turned on one by one. The integral control unit 2 recognizes a lighting apparatus of which ID is turned on, or turned off in whichever order.

The operator 60 performs photographing of a still image using the mobile terminal 5 every time turning on of a lighting apparatus L is restarted, or every time a lighting apparatus L which will be turned on is switched (Act 16). In addition, a photographing position and a photographing direction of the mobile terminal 5 in this case is set so as not to be changed from those at a time of photographing for obtaining the corresponding information on the apparatus image. The control unit 52 of the mobile terminal 5 obtains an image portion in the photographed image of the turned on lighting apparatus L using the image analysis, and obtains information on at which positions the lighting apparatuses L which are sequentially turned on are located on the layout drawing (hereinafter, referred to as apparatus position information), as the second process, by referring to the corresponding information on the apparatus image (Act 17). The mobile terminal 5 transmits the obtained apparatus position information to the integral control unit 2. For example, the mobile terminal 5 may transmit an address which is allocated to each lighting apparatus on the layout drawing as the apparatus position information.

In addition, descriptions are made by assuming that photographing of a still image is performed every time a lighting apparatus L which is turned on is switched in Act 16, but the turned on lighting apparatus L may be sequentially detected by performing the moving image photographing in the mobile terminal 5, and using the image analysis. In this case, the mobile terminal 5 may be caused to start the moving image photographing automatically.

When the integral control unit 2 receives the apparatus position information (Act 18), whether or not all of the lighting apparatuses L which are subject to the arrangement registering are turned on is determined in the subsequent Act 19, and when all of the lighting apparatuses are not turned on, the process returns to Act 15, and the lighting apparatuses are sequentially turned on. When turning on of all of the lighting apparatuses L is finished, arrangement registering information is created as the third process, in Act 20. That is, the integral control unit 2 creates arrangement registering information in which an ID of a lighting apparatus L which is turned on is corresponded with the apparatus position information which is transmitted from the mobile terminal 5.

In this manner, it is possible to create arrangement registering information which denotes a relationship between an ID of a lighting apparatus and an arranging position of a lighting apparatus on the layout drawing by a simple operation in which an operator photographs a lighting apparatus in a predetermined photographing direction in a predetermined position using the mobile terminal 5.

In this manner, according to the embodiment, it is possible to create arrangement registering information of a lighting apparatus by obtaining at which arranging position a lighting apparatus which is turned on is located on the layout drawing, by photographing a lighting apparatus using a mobile terminal such as a smart phone, obtaining an association between an arranging position on the layout drawing and an image portion of a photographed image, photographing a lighting apparatus which is turned on in predetermined order in the integral control unit using a mobile terminal, and performing an image analysis. In this manner, it is possible to register apparatus position information using an extremely simple system, when using a mobile terminal.

### Second Embodiment

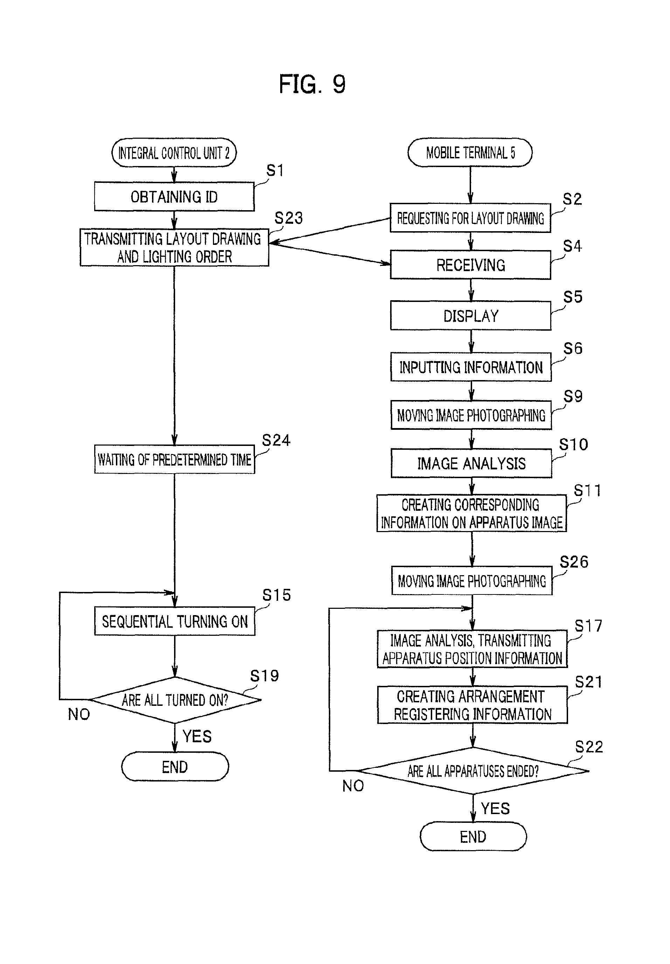

FIG. 9 is a flowchart which illustrates a second embodiment. In FIG. 9, the same reference numerals are given to the same procedures in FIG. 8, and descriptions thereof will be omitted. A hardware configuration in the embodiment is the same as that in the first embodiment, and only an application which is executed by a mobile terminal 5 is different from that in the first embodiment.

According to the first embodiment, the arrangement registering information is created when the integral control unit 2 and the mobile terminal 5 perform processes in cooperation while communicating with each other. In contrast to this, the embodiment describes an example in which arrangement registering information is obtained mainly in a mobile terminal 5.

A flowchart in FIG. 9 is different from the flowchart in FIG. 8 in that Act 23 is adopted instead of Act 3 on an integral control unit 2 side, Acts 8, 13, 14, 18, and 20 are omitted, Acts 7 and 12 are omitted on a mobile terminal 5 side, Act 26 is adopted instead of Act 16, and Acts 21 and 22 are added.

In Act 23, with respect to a transmission request for the layout drawing from the mobile terminal 5 (Act 2), the integral control unit 2 also transmits information on the lighting order of the lighting apparatus L, not only the information on the layout drawing to the mobile terminal 5. The mobile terminal 5 receives the information on the layout drawing in Act 4, and displays the layout drawing on the display unit 59 (Act 5). In addition, the control unit 52 causes the storage unit 53 to store the information on the lighting order.

The mobile terminal 5 creates the corresponding information on the apparatus image as the first process in Acts 6, 9, 10, and 11. In addition, according to the embodiment, the full lighting control is not performed on the integral control unit 2 side, but similarly to the first embodiment, the corresponding information on the apparatus image may be created in a state in which all of the lighting apparatuses L are turned on.

The integral control unit 2 sequentially turns on each lighting apparatus L in order which is illustrated using information on the lighting order which is transmitted to the mobile terminal 5 after waiting for a predetermined time in Act 24, after transmitting information such as the layout drawing (Act 15). The integral control unit 2 determines whether or not turning on of all of the lighting apparatuses are finished in Act 19, and finishes the process of turning on all of the lighting apparatuses L.

On the other hand, the mobile terminal 5 restarts the moving image photographing before finishing the waiting of a predetermined time in Act 24 (Act 26). Because of this, the mobile terminal 5 can perform photographing of each lighting apparatus L in a turned on state using the process of turning on in Act 15. At the time of photographing in Act 26, as well, the photographing position and photographing direction of the mobile terminal 5 are not changed from the time of photographing for obtaining the corresponding information on the apparatus image. In addition, the moving image photographing is automatically started before the sequential turning on of the lighting apparatus L in Act 24, but similarly to Act 16 in FIG. 8, the operator may perform photographing of the still image every time the lighting apparatus L is turned on.

In Act 17, the control unit 52 of the mobile terminal 5 performs the image analysis, and obtains the apparatus position information on as the second process by referring to the corresponding information on the apparatus image. In Act 21, the mobile terminal 5 creates the arrangement registering information in which an ID of the lighting apparatus L which is turned on is corresponded with the apparatus position information as the third process, based on the information on the lighting order which is stored in the storage unit 53, and the apparatus position information.

The mobile terminal 5 determines whether or not the arrangement registering is performed with respect to all of the lighting apparatuses in Act 21, and repeats processes in Acts 17 and 21 until the arrangement registering of all of the lighting apparatuses is finished. In this manner, it is possible to create the arrangement registering information which denotes the relationship between the ID of the lighting apparatus and the arranging position in the mobile terminal 5 by a simple operation in which the operator photographs the lighting apparatus in a predetermined photographing direction in a predetermined position using the mobile terminal 5.

In this manner, according to the embodiment, it is also possible to obtain the same effect as that of the first embodiment. In addition, according to the embodiment, it is possible to create the arrangement registering information of the lighting apparatus mainly in the mobile terminal.

In addition, it is possible to create the arrangement registering information only in the mobile terminal 5 without performing communication between the mobile terminal 5 and the integral control unit 2, by storing the information on the layout drawing, or the information on the lighting order in advance in the storage unit 53 of the mobile terminal 5, and by setting so that a full lighting control in a predetermined time, or a sequential lighting control is started in the integral control unit 2. That is, in this case, it is also possible to omit a communicating function in which communication is performed between the mobile terminal 5 and the integral control unit 2.

In addition, in the above described embodiments, the example in which corresponding information on the apparatus image and apparatus position information are obtained in the mobile terminal is described, but when image information is transmitted to the integral control unit 2, it is also possible to obtain the corresponding information on the apparatus image, the apparatus position information, and the arrangement registering information in the integral control unit 2.

In addition, in the above described embodiments, the example in which the apparatus position information is created by creating the corresponding information on the apparatus image by photographing a plurality of lighting apparatuses at the same time, and by sequentially turning on the lighting apparatuses thereafter is described, but it is also possible to obtain the corresponding information on the apparatus image and the apparatus position information by photographing a state in which the lighting apparatuses are sequentially turned on using a moving image, or a still image, and by performing the image analysis process of the photographed image.

In addition, in the above described embodiments, the lighting apparatus L is described as an apparatus which is arranged on a ceiling, but even when the lighting apparatus is arranged on a wall, or the like, it is obviously possible to create the corresponding information on the apparatus image and the apparatus position information using information on the photographing direction.

In addition, the first to third processes which are described in the above described embodiments can also be executed using software processing by a computer. At least one of the first to third processes may be executed by storing a program for executing at least one of the first to third processes in a computer-readable recording medium, causing a computer system to read the program which is stored in the recording medium, and by executing the program. In addition, the "computer system" referred to here may be a system including hardware such as OS, or a peripheral device.

In addition, the "computer system" is assumed to include an environment of providing a home page (or environment of displaying) when using the world wide web system. In addition, the "computer-readable recording medium" includes a writable non-volatile memory such as a flexible disk, a magneto-optical disc, a ROM, and a flash memory, a portable memory such as a CD-ROM, and a storage device such as a hard disk which is built in the computer system.

In addition, the "computer-readable recording medium" also includes a medium which maintains a program for a certain period of time such as a server when a program is transmitted through a network such as the Internet, or a communication line such as a telephone line, or a volatile memory (for example, dynamic random access memory (DRAM)) in a computer system as a client.

In addition, the program may be transmitted to another computer system from a computer system in which the program is stored in a storage device, or the like, through a transmission medium, or using a transmission wave in the transmission medium. Here, the "transmission medium" which transmits the program is a medium with a function of transmitting information such as a network (communication network), the Internet, for example, or a communication line such as a telephone line.

In addition, the program may be a program in which the function can be executed by being combined with a program which is stored in the computer system in advance, that is, a so-called differential file (differential program).

## Claims

1. A lighting control system comprising:
an integral control unit which controls a plurality of lighting apparatuses in which ID information unique to each is assigned in predetermined order;
a mobile terminal configured to photograph a part of or all of the plurality of lighting apparatuses; and
a control unit which performs a first process in which an association between an image portion of the lighting apparatus in a photographed image and an arranging position on a layout drawing is obtained using information on the layout drawing which illustrates the arranging positions of the plurality of lighting apparatuses, and using an image analysis process of the photographed image which is obtained by the mobile terminal; a second process in which a correspondence between the lighting apparatuses which are sequentially turned on and the lighting apparatuses on the layout drawing is obtained; and a third process in which each address corresponding to the lighting apparatuses which are arranged on the layout drawing is caused to correspond with each ID information of the plurality of lighting apparatuses.

2. The system according to claim 1,
wherein the control unit performs the first process using information on a photographing position, and information on a photographing direction using the mobile terminal.

3. The system according to claim 2,
wherein the mobile terminal includes a display unit which displays a layout drawing based on information on the layout drawing.

4. The system according to claim 3,
wherein the mobile terminal obtains information on the photographing position based on a user operation with respect to the layout drawing which is displayed on the display unit.

5. The system according to claim 1,
wherein the control unit is provided in any one of the integral control unit and the mobile terminal.

6. The system according to claim 2,
wherein the control unit is provided in any one of the integral control unit and the mobile terminal.

7. The system according to claim 1,
wherein the control unit includes a first processing unit which performs at least one of the first to third processes, and a second processing unit which performs processes other than the processes which are performed by the first processing unit,
wherein the first processing unit is provided in the integral control unit, and
wherein the second processing unit is provided in the mobile terminal.

8. The system according to claim 2,
wherein the control unit includes a first processing unit which performs at least one of the first to third processes, and a second processing unit which performs processes other than the processes which are performed by the first processing unit,
wherein the first processing unit is provided in the integral control unit, and
wherein the second processing unit is provided in the mobile terminal.

9. An arrangement registering method of a lighting control system which includes an integral control unit which controls a plurality of lighting apparatuses in which ID information unique to each is assigned in predetermined order, and a mobile terminal configured to photograph a part of or all of the plurality of lighting apparatuses, the method comprising:
performing a first process in which an association between an image portion of the lighting apparatus in a photographed image and an arranging position on a layout drawing is obtained using information on the layout drawing which illustrates the arranging positions of the plurality of lighting apparatuses, and using an image analysis process of the photographed image which is obtained by the mobile terminal;
performing a second process in which a correspondence between the lighting apparatuses which are sequentially turned on and the lighting apparatuses on the layout drawing is obtained; and
performing a third process in which each address corresponding to the lighting apparatuses which are arranged on the layout drawing is caused to correspond with each ID information of the plurality of lighting apparatuses.

10. The method according to claim 9,
wherein the first process is performed using information on a photographing position, and information on a photographing direction using the mobile terminal.

11. A computer-readable recording medium storing an arrangement registering program in a lighting control system which includes an integral control unit which controls a plurality of lighting apparatuses in which ID information unique to each is assigned in predetermined order, and a mobile terminal configured to photograph a part of or all of the plurality of lighting apparatuses, the medium causes a computer to perform:
a first process in which an association between an image portion of the lighting apparatus in a photographed image and an arranging position on a layout drawing is obtained using information on the layout drawing which illustrates the arranging positions of the plurality of lighting apparatuses, and using an image analysis process of the photographed image which is obtained by the mobile terminal;
a second process in which a correspondence between the lighting apparatuses which are sequentially turned on and the lighting apparatuses on the layout drawing is obtained; and
a third process in which each address corresponding to the lighting apparatuses which are arranged on the layout drawing is caused to correspond with each ID information of the plurality of lighting apparatuses.

12. The medium according to claim 11,
wherein the first process is performed using information on a photographing position, and information on a photographing direction using the mobile terminal.
